# EUROPÄISCHE PATENTANMELDUNG

(11) **EP 4 389 462 A1**
(43) Veröffentlichungstag der Anmeldung: **26.06.2024**
(21) Anmeldenummer: 23217562.0
(22) Anmeldetag: 18.12.2023
(51) Int. Cl.: B60C 11/12, B60C 11/03

(54) **FAHRZEUGLUFTREIFEN**

(30) Priorität: 19.12.2022 DE 102022213954
(71) Anmelder: Continental Reifen Deutschland GmbH, 30175 Hannover (DE)
(72) Erfinder: Brockmann, Jürgen, 30175 Hannover (DE); Vennebörger, Martin, 30175 Hannover (DE)
(74) Vertreter: Continental Corporation

(57) **Zusammenfassung**

Die Erfindung betrifft einen Fahrzeugluftreifen mit einem Laufstreifen mit Profilpositiven (1, 2) mit in Draufsicht zur axialen Richtung unter einem Winkel von 0° bis zu 50° verlaufenden Einschnitten (4, 5, 13), welche jeweils eine maximale Tiefe (t_{E}) von 70% bis 100% der Profiltiefe (T_{UR}) und zumindest eine lokale Verbreiterung (11, 12, 14) aufweisen, wobei die Einschnitte (4, 5, 13) außerhalb der Verbreiterung(en) (11, 12, 14) eine Breite (b_{E}) von 0,4 mm bis 1,6 mm aufweisen und wobei die bzw. jede Verbreiterung (11, 12, 14) zwei einander gegenüberliegende, an den Einschnittwänden (7) ausgebildete Vertiefungen, einen auf die maximale Tiefe (t_{E}) reichenden oder in der maximalen Tiefe (t_{E}) verlaufenden Boden (15) und eine parallel zur Laufstreifenperipherie verlaufende Querschnittsfläche (Q₁) mit einem in Richtung Boden (15) zunehmendem Flächeninhalt aufweist.

Der Flächeninhalt der Querschnittsfläche (Q₁) nimmt fortlaufend über die gesamte radiale Tiefenerstreckung der Verbreiterung (11, 12, 14) in Richtung zum Boden (15) zu.

## Beschreibung

Die Erfindung betrifft einen Fahrzeugluftreifen mit einem Laufstreifen mit von Rillen begrenzten Profilpositiven mit in Draufsicht zur axialen Richtung unter einem Winkel von 0° bis zu 50° verlaufenden Einschnitten, welche jeweils eine maximale Tiefe von 70% bis 100% der Profiltiefe, zwei Einschnittwände, einen auf der maximalen Tiefe verlaufenden Einschnittgrund und zumindest eine lokale Verbreiterung aufweisen, wobei die Einschnitte außerhalb der Verbreiterung(en) eine Breite von 0,4 mm bis 1,6 mm aufweisen und wobei die bzw. jede Verbreiterung zwei einander gegenüberliegende, an den Einschnittwänden ausgebildete Vertiefungen, einen an den Einschnittgrund anschließenden, auf die maximale Tiefe reichenden oder in der maximalen Tiefe verlaufenden Boden und eine parallel zur Laufstreifenperipherie verlaufende Querschnittsfläche mit einem in Richtung Boden zunehmendem Flächeninhalt aufweist.

Ein derartiger Fahrzeugluftreifen ist beispielsweise aus der WO 2013/002801 A1 bekannt. Gemäß einem Ausführungsbeispiel weist der Fahrzeugluftreifen einen Laufstreifen mit einer Profilrippe mit durchquerenden Einschnitten mit jeweils drei lokalen Verbreiterungen auf. Die Verbreiterungen weisen jeweils einen auf der maximalen Tiefe des Einschnitts verlaufenden Boden, zwei an diesen anschließende, in radialer Richtung verlaufende Seitenflächen und zwei zu den Einschnittwänden verlaufende, zur radialen Richtung geneigte Deckflächen auf. Der Reifen soll ein gutes Traktionsverhalten auf Nässe und Schnee aufweisen.

Es ist bekannt, dass mit zunehmenden Laufstreifenabrieb - bedingt durch die Abnahme des Leervolumens am Laufstreifen - die Nässeperformance, insbesondere die Aquaplaningperformance, und - vor allem bedingt durch das abnehmende Kippvermögen der Profilpositive - die Schneeperformance nachlässt. Bei Fahrzeugluftreifen der eingangs genannten Art bilden die Verbreiterungen der Einschnitte mit fortscheitendem Laufstreifenabrieb an die Laufstreifenperipherie tretende, nutförmige Profilnegative, welche der mit abnehmender Profiltiefe nachlassenden Nässe- und Schneeperformance, insbesondere den nachlassenden Traktionseigenschaften auf Nässe und Schnee, entgegenwirken. Die Verbreiterungen verringern bei neuem Reifen bzw. Reifen mit wenig abgefahrenem Laufstreifen die Profilsteifigkeit, wodurch vor allem die Brems- und Handlingperformance auf trockener Fahrbahn beeinträchtigt sind.

Der Erfindung liegt die Aufgabe zugrunde, einen Fahrzeugluftreifen der eingangs genannten Art im Hinblick auf den Zielkonflikt, welcher zwischen der Brems- und Handlingperformance auf trockener Fahrbahn bei neuem bzw. wenig abgefahrenem Reifen einerseits und der Nässe- und Schneeperformance bei abgefahrenem Reifen andererseits vorliegt, auf günstigere Weise als bisher zu lösen.

Gelöst wird die gestellte Aufgabe erfindungsgemäß dadurch, dass der Flächeninhalt der parallel zur Laufstreifenperipherie verlaufenden Querschnittsfläche der Verbreiterung fortlaufend über die gesamte radiale Tiefenerstreckung der Verbreiterung in Richtung zum Boden zunimmt.

Beim Abreiben des Laufstreifens wird die an der Laufstreifenperipherie liegende Öffnung der Verbreiterung mit fortschreitendem Laufstreifenabrieb größer, wodurch die Brems- und Handlingeigenschaften auf trockener Fahrbahn bei neuem bzw. wenig abgefahrenem Reifen und die Nässe- und Schneeperformance bei abgefahrenem Reifen über den Laufstreifenabrieb auf besonders vorteilhafte Weise ausbalanciert sind.

Gemäß einer bevorzugten Ausführung ist die parallel zur Laufstreifenperipherie verlaufende Querschnittsfläche der Verbreiterung, in Draufsicht betrachtet, in Erstreckungsrichtung der Einschnittmittellinie langgestreckt oval oder in Erstreckungsrichtung der Einschnittmittellinie langgestreckt hexagonal. Beim Fahren auf nasser Fahrbahn werden solche Verbreiterungen auf verwirbelungsarme Weise von Wasser durchströmt. Beim Fahren auf Schnee, insbesondere wenn der Laufstreifen schon etwas abgerieben ist, wird Schnee beim Durchlaufen der Bodenaufstandsfläche in den Verbreiterungen gehalten, wodurch die Schnee-Schnee-Reibung erhöht und derart die Schneeperformance weiter verbessert ist.

Gemäß einer weiteren bevorzugten Ausführung nimmt der Flächeninhalt der parallel zur Laufstreifenperipherie verlaufenden Querschnittsfläche der Verbreiterung auf lineare Weise oder auf progressive Weise zu. Vor allem die progressive zunehmende Querschnittsfläche ist im Hinblick auf den zu lösenden Zielkonflikt besonders vorteilhaft.

Gemäß einer bevorzugten Variante geht die Verbreiterung von der Laufstreifenperipherie aus. Bei dieser Variante ist der Reifen tendenziell stärker bezüglich seiner Nässe- und Schneeperformance bei abgefahrenem Reifen optimiert.

Eine alternative bevorzugte Variante sieht vor, dass die Verbreiterung zur Laufstreifenperipherie einen in radialer Richtung ermittelten Abstand von bis zu 1,5 mm aufweist. Durch diese Maßnahme ist der Reifen tendenziell stärker im Hinblick auf die Brems- und Handlingperformance auf trockener Fahrbahn bei neuem bzw. wenig abgefahrenem Reifen optimiert.

Vorteilhaft ist ferner eine Ausführung, welche dadurch gekennzeichnet ist, dass die Verbreiterung eine in Draufsicht senkrecht zur Einschnittmittellinie sowie in radialer Richtung verlaufende Querschnittsfläche aufweist, deren Flächeninhalt ausgehend von den Rändern der Verbreiterung fortlaufend zunimmt. Dies trägt zur Aufrechterhaltung einer hohen und gleichmäßigen Steifigkeit rund um die Verbreiterung bei, wodurch die erwähnten Brems- und Handlingeigenschaften zusätzlich verbessert sind.

Gemäß einer bevorzugten Weiterbildung der letztgenannten Ausführung weist die in radialer Richtung verlaufende Querschnittsfläche der Verbreiterung eine parallel zur Laufstreifenperipherie ermittelte Breite auf, welche über die gesamte radiale Tiefenerstreckung der Verbreiterung bis zum Boden auf lineare oder auf progressive Weise zunimmt.

Bei dieser Weiterbildung ist es vorteilhaft, wenn die Breite der in radialer Richtung verlaufenden Querschnittsfläche am Boden einen größten Wert von 150% bis 800%, insbesondere von 200% bis 600%, bevorzugt von bis zu 400%, der Breite des Einschnitts aufweist.

Gemäß einer weiteren bevorzugten Ausführung ist die Verbreiterung bezüglich einer von der Einschnittmittellinie ausgehenden, in radialer Richtung verlaufenden Mittelebene symmetrisch ausgeführt. Dadurch fallen die Auswirkungen der Verbreiterungen auf die Steifigkeit der Profilpositive besonders gleichmäßig aus, was für die Brems- und Handlingperformance auf trockener Fahrbahn bei neuem bzw. wenig abgefahrenem Reifen von weiterem Vorteil ist.

Eine erste bevorzugte Variante der letztgenannten bevorzugten Ausführung sieht vor, dass die Verbreiterung eine in der Mittelebene parallel zur Laufstreifenperipherie ermittelte, über die gesamte radiale Tiefenerstreckung der Verbreiterung konstante Länge von 15% bis 25% der entlang der Einschnittmittellinie ermittelten Länge des Einschnitts aufweist.

Eine zweite bevorzugte Variante der letztgenannten bevorzugten Ausführung sieht vor, dass die Verbreiterung eine in der Mittelebene parallel zur Laufstreifenperipherie ermittelte Länge aufweist, welche über die gesamte radiale Tiefenerstreckung der Verbreiterung auf lineare oder auf progressive Weise in Richtung zum Boden zunimmt.

Gemäß einer vorteilhaften Weiterbildung der zweiten bevorzugten Variante weist die Länge am radial äußeren Ende der Verbreiterung ihren kleinsten Wert von 3,0 mm bis 5,0 mm und am radial inneren Ende der Verbreiterung ihren größten Wert von 150% bis 400%, insbesondere von 200% bis 300%, des kleinsten Werts auf.

Ferner ist eine Ausführung bevorzugt, welche dadurch gekennzeichnet ist, dass die Verbreiterung bezüglich einer in radialer Richtung sowie in Draufsicht senkrecht zur Einschnittmittellinie verlaufenden Mittelebene symmetrisch ausgeführt ist. Diese Maßnahme sorgt insbesondere für einen gleichmäßigen Abrieb im Bereich der Verbreiterung und wirkt sich in der Folge vorteilhaft auf die Brems- und Handlingperformance auf trockener Fahrbahn aus. Ist diese Ausführung mit der bereits erwähnten Ausführung, bei welcher die Verbreiterung die in Draufsicht senkrecht zur Einschnittmittellinie sowie in radialer Richtung verlaufende Querschnittsfläche aufweist, deren Flächeninhalt ausgehend von den Rändern der Verbreiterung fortlaufend zunimmt, kombiniert, nimmt der Flächeninhalt dieser Querschnittsfläche somit ausgehend von der erwähnten Mittelebene in beide Richtungen senkrecht zur Mittelebene fortlaufend ab.

Außerdem ist eine Ausführung bevorzugt, bei welcher die Verbreiterung zu den Einschnitträndern beabstandet ist und der Einschnittgrund an beiden Seiten des Bodens der Verbreiterung anschließt. Dies ist im Hinblick auf die Entwässerung der Profilpositive und daher für die Nässeperformance bei abgefahrenem Reifen günstig.

Darüber hinaus ist eine Ausführung bevorzugt, bei welcher die Einschnitte jeweils zumindest zwei Verbreiterungen aufweisen.

Weitere Merkmale, Vorteile und Einzelheiten der Erfindung werden nun anhand der Zeichnung, die schematisch Ausführungsbeispiele der Erfindung zeigt, näher beschrieben. Dabei zeigen
Fig. 1 eine vereinfachte Ansicht auf einen in die Ebene abgewickelten Umfangsabschnitt einer mittleren Profilrippe eines Laufstreifens eines Fahrzeugluftreifens mit einer ersten Ausführungsvariante der Erfindung,
Fig. 1a einen Schnitt im Bereich eines in der mittleren Profilrippe aus Fig. 1 ausgebildeten Einschnitts,
Fig. 1b einen weiteren Schnitt im Bereich des in der mittleren Profilrippe aus Fig. 1 ausgebildeten Einschnitts,
Fig. 2 eine vereinfachte Ansicht auf einen in die Ebene abgewickelten Umfangsabschnitt einer mittleren Profilrippe eines Laufstreifens eines Fahrzeugluftreifens mit einer zweiten Ausführungsvariante der Erfindung,
Fig. 2a einen Schnitt im Bereich eines in der mittleren Profilrippe aus Fig. 2 ausgebildeten Einschnitts,
Fig. 2b einen weiteren Schnitt im Bereich des in der mittleren Profilrippe aus Fig. 2 ausgebildeten Einschnitts,
Fig. 3a einen Schnitt im Bereich eines Einschnitts gemäß einer dritten Ausführungsvariante der Erfindung und
Fig. 3b einen weiteren Schnitt im Bereich des Einschnitts aus Fig. 3a.

Gemäß der Erfindung ausgeführte Fahrzeugluftreifen sind Reifen für Kraftfahrzeuge, insbesondere für mehrspurige Kraftfahrzeuge, bevorzugt für Personenkraftwagen (PKWs), Vans (Transporter) oder SUVs, sowie vorzugsweise Reifen in Radialbauart für Felgen mit einem ganzzahligen Felgendurchmesser von 13 Zoll bis 24 Zoll, insbesondere von 18 Zoll bis 23 Zoll.

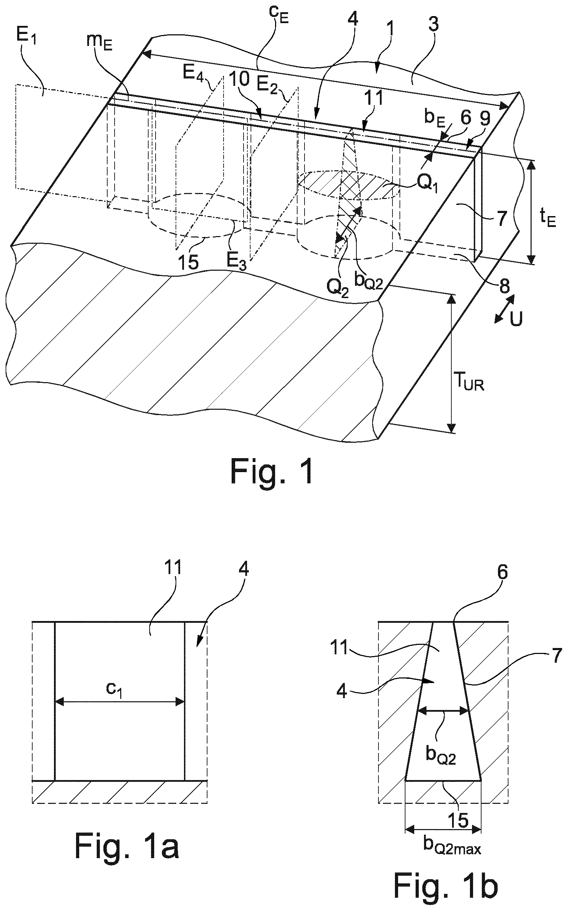

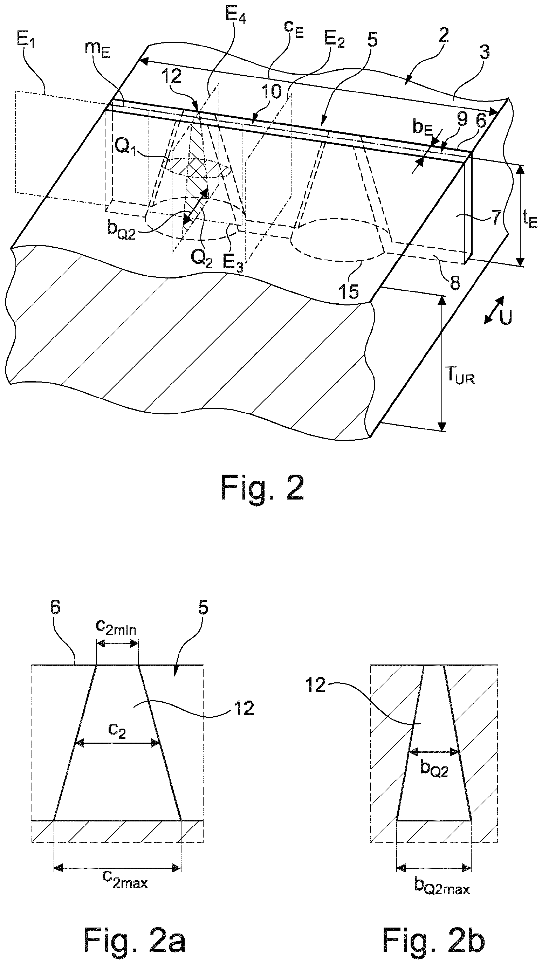

Fig. 1 und Fig. 2 zeigen je eine Ansicht auf einen Umfangsabschnitt einer umlaufenden, mittleren Profilrippe 1 (Fig. 1), 2 (Fig. 2) eines Laufstreifens eines Fahrzeugluftreifens. Die Umfangsrichtung ist jeweils durch einen Doppelpfeil U angedeutet.

Die mittlere Profilrippe 1, 2 ist seitlich von in Fig. 1 und Fig. 2 nicht gezeigten Umfangsrillen begrenzt, welche in radialer Richtung jeweils in der vorgesehenen Profiltiefe T_{UR} ausgeführt sind, die für den bevorzugten Reifentyp üblicherweise 6,5 mm bis 13,0 mm beträgt. Sind die Umfangsrillen verschieden tief ausgeführt, wird unter der Profiltiefe die Tiefe der tiefsten Umfangsrille verstanden.

Die mittlere Profilrippe 1, 2 weist eine in der Laufstreifenperipherie liegende Rippenaußenfläche 3 auf und ist über ihren Umfang mit einer Vielzahl von von der Rippenaußenfläche 3 ausgehenden Einschnitten 4 (Profilrippe 1), 5 (Profilrippe 2) versehen, wobei im gezeigten Umfangsabschnitt ein einziger Einschnitt 4 (Profilrippe 1), 5 (Profilrippe 2) vorgesehen ist.

Der Einschnitt 4, 5 verläuft, in Draufsicht betrachtet, in axialer Richtung, durchquert die mittlere Profilrippe 1, 2, weist eine an der Rippenaußenfläche 3 liegende, in seiner Erstreckungsrichtung ausgerichtete Einschnittmittellinie mε auf, ist bezüglich einer in radialer Richtung ausgerichteten, von der Einschnittmittellinie mε ausgehenden Einschnitt-Längsschnitt-Mittelebene E₁ und bezüglich einer in radialer Richtung ausgerichteten Einschnitt-Querschnitt-Mittelebene E₂, welche orthogonal zur Einschnitt-Längsschnitt-Mittelebene E₁ sowie bezogen auf die Längserstreckung durch die Mitte des Einschnitts 4, 5 verläuft, symmetrisch gestaltet.

Der Einschnitt 4, 5 weist zwei in Draufsicht gerade verlaufende, an der Rippenaußenfläche 3 liegende Einschnittkanten 6 auf, ist durch zwei von den Einschnittkanten 6 ausgehenden Einschnittwänden 7 und einem Einschnittgrund 8 begrenzt und setzt sich, in Erstreckungsrichtung seiner Einschnittmittellinie mε betrachtet, aus zwei randseitigen Einschnittabschnitten 9, einem mittleren Einschnittabschnitt 10 und zwei in radialer Richtung langgestreckten, kanalförmigen Verbreiterungen 11 (Einschnitt 4), 12 (Einschnitt 5) zusammen.

Die Einschnittwände 7 verlaufen im Bereich außerhalb der Verbreiterungen 11, 12 in radialer Richtung und sind in diesem Bereich unstrukturierte, beim Ausführungsbeispiel ebene Flächen. Der Einschnittgrund 8 verläuft beim Ausführungsbeispiel parallel zur Laufstreifenperipherie und kann alternativ, im in Draufsicht senkrecht zur Einschnittmittellinie mε verlaufenden Querschnitt betrachtet, zumindest abschnittsweise gerundet ausgeführt sein.

Der Einschnitt 4, 5 weist eine an der Einschnittmittellinie mε ermittelte Länge c_{E}, in radialer Richtung eine maximale Tiefe t_{E} (Tiefe an der tiefsten Stelle) von 70% bis 100% der Profiltiefe T_{UR} und eine zwischen den Einschnittkanten 6 sowie zwischen den Einschnittwänden 7 im Bereich außerhalb der Verbreiterungen 11, 12 vorliegende, konstante Breite bε von 0,4 mm bis 1,6 mm, insbesondere von bis zu 1,2 mm, auf. Die Breite bε ist dabei als jeweils kleinstmöglicher Abstand zwischen den Einschnittwänden 7 bzw. als jeweils kleinstmöglicher Abstand zwischen den Einschnittkanten 6 ermittelt. Bevorzugt beträgt die maximale Tiefe tε höchstens der um 0,5 mm verringerten Profiltiefe T_{UR}. Der Einschnittgrund 8 verläuft auf der maximalen Tiefe tε.

Jede Verbreiterung 11, 12 ist bezüglich einer von der Einschnittmittellinie m_{E} ausgehenden, beim Ausführungsbeispiel mit der Einschnitt-Längsschnitt-Mittelebene E₁ zusammenfallenden Mittelebene E₃ sowie jeweils bezüglich einer in radialer Richtung sowie senkrecht zur Mittelebene E₃ verlaufenden Mittelebene E₄ symmetrisch ausgeführt. Jede Verbreiterung 11, 12 geht von den Einschnittkanten 6 aus, erstreckt sich in radialer Richtung in den Einschnitt 4, 5 hinein, reicht über die gesamte radiale Erstreckung der Einschnittwände 7 und weist zwei einander direkt gegenüberliegende, an den Einschnittwänden 7 ausgebildete Vertiefungen sowie einen in der maximalen Tiefe tε sowie beim Ausführungsbeispiel parallel zur Laufstreifenperipherie verlaufenden Boden 15 auf. Der Boden 15 schließt, im Längsschnitt des Einschnitts 4, 5 betrachtet, beidseitig an den Einschnittgrund 8 an.

Fig. 1a und Fig. 2a zeigen je einen an der Einschnitt-Längsschnitt-Mittelebene E₁ (Fig. 1, Fig. 2) und damit an der Mittelebene E₃ (Fig. 1, Fig. 2) ausgerichteten Schnitt durch den Einschnitt 4 (Fig. 1a), 5 (Fig. 2a) im Bereich einer Verbreiterung 11 (Einschnitt 4, vergl. Fig. 1), 12 (Einschnitt 5, vergl. Fig. 2). Fig. 1b und Fig. 2b zeigen je einen entlang der Mittelebene E₄ (Fig. 1, Fig. 2) ausgerichteten Schnitt durch den Einschnitt 4 (Fig. 1a), 5 (Fig. 2a) und daher ebenfalls einen Schnitt im Bereich einer Verbreiterung 11 (Einschnitt 4, vergl. Fig. 1), 12 (Einschnitt 5, vergl. Fig. 2).

Gemäß Fig. 1 und Fig. 2 weist jede Verbreiterung 11 (Fig. 1), 12 (Fig. 2) eine parallel zur Laufstreifenperipherie verlaufende, parallel zur Einschnittmittellinie m_{E} langgestreckt ovale Querschnittsfläche Q₁ und eine in Draufsicht senkrecht zur Einschnittmittellinie mε verlaufende Querschnittsfläche Q₂ auf. Das Oval ist dabei - entsprechend der Geometrie des Einschnitts 4, 5 - an seinen Längsenden über die Breite b_{E} des Einschnitts 4, 5 abgeflacht. Der Flächeninhalt der Querschnittsfläche Q₁ nimmt über die gesamte radiale Tiefenerstreckung der Verbreiterung 11, 12 in Richtung zum Boden 15 auf lineare Weise zu. Der Flächeninhalt der Querschnittsfläche Q₂ nimmt ausgehend von der Mittelebene E₄ in beide Richtungen senkrecht zur Mittelebene E₄ fortlaufend ab, wobei die Querschnittsfläche Q₂ eine parallel zur Laufstreifenperipherie ermittelte Breite b_{Q2} (vergl. Fig. 1b, Fig. 2b) aufweist, welche über die gesamte radiale Tiefenerstreckung der Verbreiterung 11, 12 in Richtung zum Boden 15 auf lineare Weise zunimmt und am Anschluss der Verbreiterung 11, 12 zum mittleren Einschnittabschnitt 10 sowie am Anschluss der Verbreiterung 11, 12 zum jeweiligen randseitigen Einschnittabschnitt 9 mit der Breite bε des Einschnitts 4, 5 übereinstimmt. Die Breite b_{Q2} weist in der Mittelebene E₄ am Boden 15 ihren größten Wert b_{Q2max} (Fig. 1b, Fig. 2b) von 150% bis 800%, insbesondere von 200% bis 600%, bevorzugt von bis zu 400%, der Breite bε des Einschnitts 3 auf.

Wie Fig. 1 iVm Fig. 1a zeigt, weist jede Verbreiterung 11 eine parallel zur Laufstreifenperipherie sowie in der Mittelebene E₃ (vergl. Fig. 1) ermittelte, über ihre gesamte radiale Tiefenerstreckung konstante Länge c₁ (Fig. 1a) von 15% bis 25% der Länge c_{E} (Fig. 1) des Einschnitts 4 auf.

Wie Fig. 2 iVm Fig. 2a zeigt, weist jede Verbreiterung 12 eine parallel zur Laufstreifenperipherie sowie in der Mittelebene E₃ (Fig. 2) ermittelte Länge c₂ (Fig. 2a) auf, welche über die gesamte radiale Tiefenerstreckung der Verbreiterung 12 in Richtung zum Boden 15 auf lineare Weise zunimmt. Die Länge c₂ weist am radial äußeren Ende der Verbreiterung 12, also an den Einschnittkanten 6, ihren kleinsten Wert c₂ₘᵢₙ (Fig. 2a) von 3,0 mm bis 5,0 mm und am radial inneren Ende der Verbreiterung 12 ihren größten Wert c₂ₘₐₓ (Fig. 2a) von 150% bis 400%, insbesondere von 200% bis 300%, des kleinsten Werts c₂ₘᵢₙ auf.

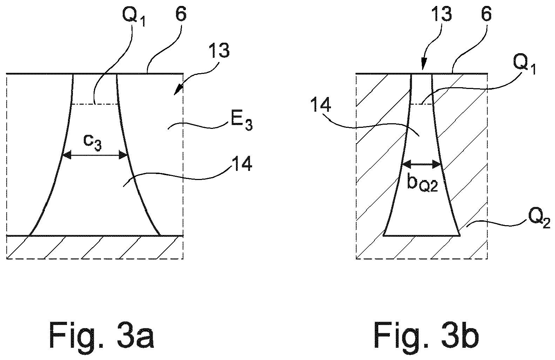

Fig. 3a und Fig. 3b zeigen Schnitte durch einen Einschnitt 13 im Bereich einer in radialer Richtung langgestreckten Verbreiterung 14, wobei die Verbreiterung 14 eine Alternative zur Verbreiterung 11, 12 ist. Der Einschnitt 13 ist außerhalb der Verbreiterung(en) 14 übereinstimmend zum Einschnitt 4 (Fig. 1), 5 (Fig. 2) ausgeführt. Die Verbreiterung(en) 14 unterscheidet bzw. unterscheiden sich von der Verbreiterung 12 dadurch, dass der Flächeninhalt der Querschnittsfläche Q₁ über die gesamte radiale Tiefenerstreckung der Verbreiterung(en) 14 in Richtung zum Boden 15 auf progressive Weise zunimmt, wobei sowohl die in der Mittelebene E₃ vorliegende Länge c₃ (Fig. 3a) als auch die in der Querschnittsfläche Q₂ vorliegende Breite b_{Q2} (Fig. 3b) auf progressive Weise zunehmen. Die Zunahme der Länge c₃ und der Breite b_{Q2} beschleunigt sich daher mit zunehmender Tiefe.

Die Erfindung ist auf die beschriebenen Ausführungsbeispiele nicht beschränkt.

Die Einschnitte können, in Draufsicht betrachtet, insgesamt gerade oder gebogen, ferner zumindest abschnittsweise wellenförmig, insbesondere in Form einer Zickzackwelle, einer Sägezahnwelle oder einer "gerundeten" Welle, beispielsweise einer Sinuswelle, sowie bezogen auf die in Erstreckungsrichtung des Einschnitts ausgerichteten Einschnittmittellinien mε zur axialen Richtung unter einem Winkel von 0° bis 50°, insbesondere von 5° bis 45°, verlaufen, wobei sich der Winkel bei Einschnitten mit gebogen verlaufender Einschnittmittellinie mε auf eine die Enden der Einschnittmittellinie verbindende gerade Linie bezieht. Bei in Draufsicht wellenförmig bzw. abschnittsweise wellenförmig verlaufenden Einschnitten verlaufen die Einschnittmittellinien daher derart, dass sich die Amplitude der Welle auf die Einschnittmittellinie bezieht. Die Einschnitte können in beliebigen bis zur Laufstreifenperipherie reichenden Profilpositiven, also in Profilblöcken oder Profilrippen, ausgebildet sein und ein- oder beidseitig innerhalb der Profilpositive enden. Einzelne der Einschnittabschnitte, insbesondere die randseitigen Einschnittabschnitte, können in radialer Richtung angehoben sein. Die Einschnitte weisen jeweils zumindest eine Verbreiterung auf und können jeweils insbesondere bis zu drei Verbreiterungen aufweisen.

Der Boden der Verbreiterungen kann, im Querschnitt des Einschnitts betrachtet, zumindest abschnittsweise bogenförmig, beispielsweise U-förmig, ausgeführt sein, wobei die tiefste Stelle des Bodens auf die maximale Eischnitttiefe reicht. Die Verbreiterung(en) kann bzw. können einen in radialer Richtung ermittelten Abstand zur Laufstreifenperipherie aufweisen, wobei dieser Abstand bis zu 1,5 mm beträgt.

### Bezugszeichenliste

- 1: Profilrippe
- 2: Profilrippe
- 3: Rippenaußenfläche
- 4: Einschnitt
- 5: Einschnitt
- 6: Einschnittkante
- 7: Einschnittwand
- 8: Einschnittgrund
- 9: randseitiger Einschnittabschnitt
- 10: mittlerer Einschnittabschnitt
- 11: Verbreiterung
- 12: Verbreiterung
- 13: Einschnitt
- 14: Verbreiterung
- 15: Boden
- b_{E}, b_{Q1}, b_{Q2}: Breite
- b_{Q2max}: größter Wert
- c_{E}, c₁, c₂, c₃: Länge
- c₂ₘᵢₙ: kleinster Wert
- c₂ₘₐₓ: größter Wert
- E₁: Einschnitt-Längsschnitt-Mittelebene
- E₂: Einschnitt-Querschnitt-Mittelebene
- E₃, E₄: Mittelebene
- m_{E}: Einschnittmittellinie
- Q₁, Q₂: Querschnittsfläche
- t_{E}: maximale Tiefe
- T_{UR}: Profiltiefe
- U: Doppelpfeil (Umfangsrichtung)

## Patentansprüche

1. Fahrzeugluftreifen mit einem Laufstreifen mit von Rillen begrenzten Profilpositiven (1, 2) mit in Draufsicht zur axialen Richtung unter einem Winkel von 0° bis zu 50° verlaufenden Einschnitten (4, 5, 13), welche jeweils eine maximale Tiefe (t_{E}) von 70% bis 100% der Profiltiefe (T_{UR}), zwei Einschnittwände (7), einen auf der maximalen Tiefe (t_{E}) verlaufenden Einschnittgrund (8) und zumindest eine lokale Verbreiterung (11, 12, 14) aufweisen, wobei die Einschnitte (4, 5, 13) außerhalb der Verbreiterung(en) (11, 12, 14) eine Breite (b_{E}) von 0,4 mm bis 1,6 mm aufweisen und wobei die bzw. jede Verbreiterung (11, 12, 14) zwei einander gegenüberliegende, an den Einschnittwänden (7) ausgebildete Vertiefungen, einen an den Einschnittgrund (8) anschließenden, auf die maximale Tiefe (t_{E}) reichenden oder in der maximalen Tiefe (t_{E}) verlaufenden Boden (15) und eine parallel zur Laufstreifenperipherie verlaufende Querschnittsfläche (Q₁) mit einem in Richtung Boden (15) zunehmendem Flächeninhalt aufweist,
**dadurch gekennzeichnet,**
**dass** der Flächeninhalt der parallel zur Laufstreifenperipherie verlaufenden Querschnittsfläche (Q₁) der Verbreiterung (11, 12, 14) fortlaufend über die gesamte radiale Tiefenerstreckung der Verbreiterung (11, 12, 14) in Richtung zum Boden (15) zunimmt.

2. Fahrzeugluftreifen nach Anspruch 1, **dadurch gekennzeichnet, dass** die parallel zur Laufstreifenperipherie verlaufende Querschnittsfläche (Q₁) der Verbreiterung (11, 12, 14), in Draufsicht betrachtet, in Erstreckungsrichtung der Einschnittmittellinie (m_{E}) langgestreckt oval oder in Erstreckungsrichtung der Einschnittmittellinie (m_{E}) langgestreckt hexagonal ist.

3. Fahrzeugluftreifen nach Anspruch 1 oder 2, **dadurch gekennzeichnet, dass** der Flächeninhalt der parallel zur Laufstreifenperipherie verlaufenden Querschnittsfläche (Q₁) der Verbreiterung (11, 12, 14) auf lineare Weise oder auf progressive Weise zunimmt.

4. Fahrzeugluftreifen nach einem der Ansprüche 1 bis 3, **dadurch gekennzeichnet, dass** die Verbreiterung (11, 12, 14) von der Laufstreifenperipherie ausgeht.

5. Fahrzeugluftreifen nach einem der Ansprüche 1 bis 3, **dadurch gekennzeichnet, dass** die Verbreiterung zur Laufstreifenperipherie einen in radialer Richtung ermittelten Abstand von bis zu 1,5 mm aufweist.

6. Fahrzeugluftreifen nach einem der Ansprüche 1 bis 5, **dadurch gekennzeichnet, dass** die Verbreiterung (11, 12, 14) eine in Draufsicht senkrecht zur Einschnittmittellinie (m_{E}) sowie in radialer Richtung verlaufende Querschnittsfläche (Q₂) aufweist, deren Flächeninhalt ausgehend von den Rändern der Verbreiterung (11, 12, 14) fortlaufend zunimmt.

7. Fahrzeugluftreifen nach Anspruch 6, **dadurch gekennzeichnet, dass** die in radialer Richtung verlaufende Querschnittsfläche (Q₂) der Verbreiterung (11, 12, 14) eine parallel zur Laufstreifenperipherie ermittelte Breite (b_{Q2}) aufweist, welche über die gesamte radiale Tiefenerstreckung der Verbreiterung (11, 12, 14) bis zum Boden (15) auf lineare oder auf progressive Weise zunimmt.

8. Fahrzeugluftreifen nach Anspruch 7, **dadurch gekennzeichnet, dass** die Breite (b_{Q2}) der in radialer Richtung verlaufenden Querschnittsfläche (Q₂) am Boden (15) einen größten Wert (b_{Q2max}) von 150% bis 800%, insbesondere von 200% bis 600%, bevorzugt von bis zu 400%, der Breite (b_{E}) des Einschnitts (3) aufweist.

9. Fahrzeugluftreifen nach einem der Ansprüche 1 bis 8, **dadurch gekennzeichnet, dass** die Verbreiterung (11, 12, 14) bezüglich einer von der Einschnittmittellinie (m_{E}) ausgehenden, in radialer Richtung verlaufenden Mittelebene (E₃) symmetrisch ausgeführt ist.

10. Fahrzeugluftreifen nach Anspruch 9, **dadurch gekennzeichnet, dass** die Verbreiterung (11) eine in der Mittelebene (E₃) parallel zur Laufstreifenperipherie ermittelte, über die gesamte radiale Tiefenerstreckung der Verbreiterung (11) konstante Länge (c₁) von 15% bis 25% der entlang der Einschnittmittellinie (m_{E}) ermittelten Länge (c_{E}) des Einschnitts (4) aufweist.

11. Fahrzeugluftreifen nach Anspruch 9, **dadurch gekennzeichnet, dass** die Verbreiterung (12, 14) eine in der Mittelebene (E₃) parallel zur Laufstreifenperipherie ermittelte Länge (c₂, c₃) aufweist, welche über die gesamte radiale Tiefenerstreckung der Verbreiterung (12, 14) auf lineare oder auf progressive Weise in Richtung zum Boden (15) zunimmt.

12. Fahrzeugluftreifen nach Anspruch 11, **dadurch gekennzeichnet, dass** die Länge (c₂, c₃) am radial äußeren Ende der Verbreiterung (12, 14) ihren kleinsten Wert (c₂ₘᵢₙ) von 3,0 mm bis 5,0 mm und am radial inneren Ende der Verbreiterung (12, 14) ihren größten Wert (c₂ₘₐₓ) von 150% bis 400%, insbesondere von 200% bis 300%, des kleinsten Werts (c₂ₘᵢₙ) aufweist.

13. Fahrzeugluftreifen nach einem der Ansprüche 1 bis 12, **dadurch gekennzeichnet, dass** die Verbreiterung (11, 12, 14) bezüglich einer in radialer Richtung sowie in Draufsicht senkrecht zur Einschnittmittellinie (mε) verlaufenden Mittelebene (E₄) symmetrisch ausgeführt ist.

14. Fahrzeugluftreifen nach einem der Ansprüche 1 bis 13, **dadurch gekennzeichnet, dass** die Verbreiterung (11, 12, 14) zu den Einschnitträndern beabstandet ist und der Einschnittgrund (8) an beiden Seiten des Bodens (15) der Verbreiterung (11, 12, 14) anschließt.

15. Fahrzeugluftreifen nach einem der Ansprüche 1 bis 14, **dadurch gekennzeichnet, dass** die Einschnitte (4, 5, 13) jeweils zumindest zwei Verbreiterungen (11, 12, 14) aufweisen.
